# EUROPEAN PATENT APPLICATION

(11) **EP 1 601 197 A2**
(43) Date of publication of application: **30.11.2005**
(21) Application number: 04023106.0
(22) Date of filing: 28.09.2004
(51) Int. Cl.: H04N 7/173, H04N 7/24

(54) **Program interlocking system**

(30) Priority: 19.05.2004 JP 2004148469
(71) Applicant: Dwango Co., Ltd., Tokyo 103-0007 (JP)
(72) Inventor: Suzuki, Keiichi, c/o Dwango Co., Ltd., Tokyo 103-0007 (JP)
(74) Representative: Betten & Resch

(57) **Abstract**

A program interlocking system provides various services suitable for a user's taste. In the program interlocking system, program interlock data received from a main server is held in an internal memory of a mobile phone, and a program interlocking process is performed. Subsequently, a request for the main server to transmit current time is performed, and a timer is operated with current time data received from the main memory as the current time. The next operating time is calculated by adding elapsed time indicated by elapsed time data to start time indicated by the start time data of program interlock data. The time until the next operation is calculated. Subsequently, a waiting state is maintained until the calculated time elapses. When the calculated time elapses, a file A in an output data field related to the elapsed time data is reproduced.

## Description

### BACKGROUND OF THE INVENTION

### Field of the Invention

The present invention relates to a program interlocking system that provides data to a portable terminal interlock with a related program to be broadcasted.

### Description of the Related Art

Conventionally, there has been disclosed a system capable of downloading content data, such as a television program, to a portable content-reproducing apparatus (for example, see JP-A-2003-196491).

In such a system, a content supplying apparatus typically outputs specified content data to a content reproducing apparatus. A user then reproduces the content data, for example, using the content reproducing apparatus.

However, , there recently have been demands for providing additional content related services that can attract various interests of users.

### SUMMARY OF THE INVENTION

Accordingly, the present invention is designed in view of the aspects to be improved in the conventional art, and it is an object of the present invention to provide a program interlocking system capable of providing various services suitable for users' tastes.

A first aspect of the present invention provides a program interlocking system in which a portable terminal used by a user and a provider server having a database are connected to each other over a network so as to communicate with each other, interlock data for interlocking with a program to be broadcasted is stored in the database, and the interlock data is composed of reproduction data for reproducing a character string and/or a voice related to a scene of the program and appearance time data indicating the time when the scene appears. In the program interlocking system, the portable terminal comprises: interlock data requesting means for requesting the provider server to transmit the interlock data; interlock data holding means for, when receiving the interlock data from the provider server, storing and holding the interlock data; current time requesting means for requesting the provider server to transmit current time; time data processing means for, when receiving current time data from the provider server, measuring time using measuring means based on the time indicated by the current time data; and reproducing means for, when the time measured by the measuring means is the time indicated by the appearance time data of the interlock data, reproducing the reproduction data related to the appearance time data. In addition, the provider server comprises: interlock data transmittingmeans for, when receiving the transmission request for the interlock data from the portable terminal, transmitting the interlock data stored in the database to the portable terminal having requested the data transmission; and current time data transmitting means for, when receiving the transmission request for the current time from the portable terminal, transmitting the current time data indicating the current time to the portable terminal having requested the data transmission.

That is, the user watching a broadcast program requests a provider server to transmit interlock data related a scene of the program using a portable terminal. Then, the provider server having received the transmission request for the interlock data transmits the interlock data stored in the database to the portable terminal having requested the data transmission. Subsequently, the portable terminal having received the interlock data stores and holds the interlock data composed of the reproduction data and the appearance time data.

When the portable terminal starts reproducing the interlock data, first, the portable terminal requests the provider server to transmit current time. Then, the provider server having received the transmission request for the current time transmits the current time data indicating the current time to the portable terminal having requested the data transmission. When the portable terminal receives the current time data, the measuring means measures time based on the time indicated by the current time data.

When the time measured by the measuring means is the time indicated by the current time data of the interlock data, the reproduction data related to the appearance time data is reproduced.

In this case, the appearance time data indicates the time when a predetermined scene of the program appears. Therefore, at the time when the predetermined scene appears in the program being broadcasting, the reproduction data is reproduced for reproducing at least one of the character string and the voice related to the scene. Then, the character string or the voice is reproduced for the user being watching the program in interlock with the scene.

Further, a second aspect of the present invention provides a program interlocking system in which a portable terminal used by a user and a provider server having a database are connected to each other over a network so as to communicate with each other, a program start time of a program to be broadcasted and interlock data for interlocking with the program are stored in the database, and the interlock data is composed of reproduction data for reproducing a character string and/or a voice related to a scene of the program and elapsed time data indicating the time elapsed from the program start time until the scene appears. In the program interlocking system, the portable terminal comprises: interlock data requesting means for requesting the provider server to transmit the interlock data; interlock data holding means for, when receiving the interlock data from the provider server, storing and holding the interlock data; time requesting means for requesting the provider server to transmit current time and the program start time; time data processing means for, when receiving current time data and program start time data from the provider server, measuring time using measuring means based on the time indicated by the current time data and for storing and holding the program start time data; and reproducing means for, when the time measured by the measuring means is a time obtained by adding the program start time indicated by the program start time data to the elapsed time indicated by the elapsed time data, reproducing the reproduction data related to the elapsed time data. In addition, the provider server comprises: interlock data transmitting means for, when receiving the transmission request for the interlock data from the portable terminal, transmitting the interlock data stored in the database to the portable terminal having requested the data transmission; and time data transmitting means for, when receiving the transmission request for the current time and the program start time from the portable terminal, transmitting the current time data indicating the current time and the program start time data indicating the program start time to the portable terminal having requested the data transmission.

That is, the user watching a broadcast program requests the provider server to transmit the interlock data related a scene of the program using the portable terminal. Then, the provider server having received the transmission request for the interlock data transmits the interlock data stored in the database to the portable terminal having requested the data transmission. Subsequently, the portable terminal having received the interlock data stores and holds the interlock data composed of the reproduction data and the elapsed time data.

When the portable terminal starts reproducing the interlock data, first, the portable terminal requests the provider server to transmit the current time and the program start time. Then, the provider server having received the transmission request transmits the current time data indicating the current time and the program start time data indicating the program start time to the portable terminal having requested the data transmission. When the portable terminal receives the current time data and the program start time data, the measuring means measures time based on the time indicated by the current time data and then stores and holds the program start time data.

When the time measured by the measuring means is a time obtained by adding the program start time indicated by the program start time data to the elapsed time indicated by the elapsed time data, the reproduction data related to the elapsed time data is reproduced.

In this case, the program start time data indicates the program start time of the program, and the elapsed time data indicates the time elapsed from the program start time until the scene appears. Therefore, at the time when the scene appears in the program being broadcasted, the reproduction data is reproduced for reproducing at least one of the character string and the voice related to the scene. Then, the character string or the voice is reproduced for the user being watching the program in interlock with the scene.

Furthermore, the program start time data is supplied from the provider server. Therefore, even when the program start time is delayed or moved up according to the relationship with a previous program, it is possible to secure the interlock with a program by updating the program start time data stored in the database.

Moreover, a third aspect of the present invention provides a portable terminal which is connected to a provider server having a database over a network so as to communicate with each other, the database being stored with interlock data composed of reproduction data for reproducing a character string and/or a voice related to a scene of a program to be broadcasted and appearance time data indicating the time when the scene appears. The portable terminal comprises: interlock data requesting means for requesting the provider server to transmit the interlock data; interlock data holding means for, when receiving the interlock data transmitted from the provider server in response to the transmission request for the interlock data, storing and holding the interlock data; current time requesting means for requesting the provider server to transmit current time; time data processing means for, when receiving current time data indicating the current time from the provider server in response to the transmission request for the current time, measuring time using measuring means based on the time indicated by the current time data; and reproducing means for, when the time measured by the measuring means is the time indicated by the appearance time data of the interlock data, reproducing the reproduction data related to the appearance time data.

Further, a fourth aspect of the present invention provides a portable terminal which is connected to a provider server having a database over a network so as to communicate with each other, the database being stored with a program start time of a program to be broadcasted and interlock data, the interlock data being composed of reproduction data for reproducing a character string and/or a voice related to a scene of the program and elapsed time data indicating the time elapsed from the program start time until the scene appears. Here, the portable terminal comprises: interlock data requesting means for requesting the provider server to transmit the interlock data; interlock data holding means for, when receiving the interlock data transmitted from the provider server in response to the transmission request for the interlock data, storing and holding the interlock data; time requesting means for requesting the provider server to transmit current time and the program start time; time data processing means for, when receiving current time data indicating the current time and program start time data indicating the program start time transmitted from the provider server in response to the transmission request for the current time and the program start time, measuring time using measuring means based on the time indicated by the current time data and for storing and holding the program start time data; and reproducing means for, when the time measured by the measuring means is a time obtained by adding the program start time indicated by the program start time data to the elapsed time indicated by the elapsed time data, reproducing the reproduction data related to the elapsed time data.

In this way, it is possible to obtain the same effects as those in the above-mentioned aspects by allowing the portable terminal to access the provider server to perform a predetermined operation.

Furthermore, a fifth aspect of the present invention provides a program interlocking method using a portable terminal which is connected to a provider server having a database over a network so as to communicate with each other, the database being stored with interlock data composed of reproduction data for reproducing a character string and/or a voice related to a scene of a program to be broadcasted and appearance time data indicating the time when the scene appears. Here, the method comprises: a step of requesting the provider server to transmit the interlock data; a step of, when receiving the interlock data transmitted from the provider server in response to the transmission request for the interlock data, storing and holding the interlock data; a step of requesting the provider server to transmit current time; a step of, when receiving current time data indicating the current time from the provider server in response to the transmission request for the current time, measuring time using measuring means based on the time indicated by the current time data; a step of, when the time measured by the measuring means is the time indicated by the appearance time data of the interlock data, reproducing the reproduction data related to the appearance time data.

Moreover, a sixth aspect of the present invention provides a program interlocking method using a portable terminal which is connected to a provider server having a database over a network so as to communicate with each other, the database being stored with a program start time of a program to be broadcasted and interlock data, the interlock data being composed of reproduction data for reproducing a character string and/or a voice related to a scene of the program and elapsed time data indicating the time elapsed from the program start time until the scene appears. Here, the method comprises: a step of requesting the provider server to transmit the interlock data; a step of, when receiving the interlock data transmitted from the provider server in response to the transmission request for the interlock data, storing and holding the interlock data; a step of requesting the provider server to transmit current time and the program start time; a step of, when receiving current time data indicating the current time and program start time data indicating the program start time transmitted from the provider server in response to the transmission request for the current time and the program start time, measuring time using measuring means based on the time indicated by the current time data and of storing and holding the program start time data; and a step of, when the time measured by the measuring means is a time obtained by adding the program start time indicated by the program start time data to the elapsed time indicated by the elapsed time data, reproducing the reproduction data related to the elapsed time data.

Therefore, it is possible to obtain the same effects as those in the above-mentioned aspects by allowing the portable terminal to execute the above-mentioned steps. Thus, by allowing hardware, such as a computer, to execute the above-mentioned steps, it is possible to make the hardware easily execute the program interlocking technique of the present invention.

Further, a seventh aspect of the present invention provides a media program interlocking program executed by a computer of a portable terminal, the portable terminal being connected to a provider server having a database over a network so as to communicate with each other, the database being stored with interlock data composed of reproduction data for reproducing a character string and a voice related to a scene of a program to be broadcasted and appearance time data indicating the time when the scene appears. Here, the interlocking program comprises: a procedure of requesting the provider server to transmit the interlock data; a procedure of, when receiving the interlock data transmitted from the provider server in response to the transmission request for the interlock data, storing and holding the interlock data; a procedure of requesting the provider server to transmit current time; a procedure of, when receiving current time data indicating the current time from the provider server in response to the transmission request for the current time, measuring time using measuring means based on the time indicated by the current time data; a procedure of, when the time measured by the measuring means is the time indicated by the appearance time data of the interlock data, reproducing the reproduction data related to the appearance time data.

Furthermore, an eighth aspect of the present invention provides a media program interlocking program executed by a computer of a portable terminal, the portable terminal being connected to a provider server having a database over a network so as to communicate with each other, the database being stored with a program start time of a program to be broadcasted and interlock data, the interlock data being composed of reproduction data for reproducing a character string and a voice related to a scene of the program and elapsed time data indicating the time elapsed from the program start time until the scene appears. Here, the interlocking program comprises: a procedure of requesting the provider server to transmit the interlock data; a procedure of, when receiving the interlock data transmitted from the provider server in response to the transmission request for the interlock data, storing and holding the interlock data; a procedure of requesting the provider server to transmit current time and the program start time; a procedure of, when receiving current time data indicating the current time and program start time data indicating the program start time transmitted from the provider server in response to the transmission request for the current time and the program start time, measuring time using measuring means based on the time indicated by the current time data and of storing and holding the program start time data; and a procedure of, when the time measured by the measuring means is a time obtained by adding the program start time indicated by the program start time data to the elapsed time indicated by the elapsed time data, reproducing the reproduction data related to the elapsed time data.

Therefore, it is possible to obtain the same effects as those in the above-mentioned aspects by allowing the computer of the portable terminal to execute processes according to the program.

Moreover, a ninth aspect of the present invention provides a storage medium in which a program for controlling a portable terminal is stored, the portable terminal being connected to a provider server having a database over a network so as to communicate with each other, the database being stored with interlock data composed of reproduction data for reproducing a character string and/or a voice related to a scene of a program to be broadcasted and appearance time data indicating the time when the scene appears. Here, the storage medium comprises: a procedure of requesting the provider server to transmit the interlock data; a procedure of, when receiving the interlock data transmitted from the provider server in response to the transmission request for the interlock data, storing and holding the interlock data; a procedure of requesting the provider server to transmit current time; a procedure of, when receiving current time data indicating the current time from the provider server in response to the transmission request for the current time, measuring time using measuring means based on the time indicated by the current time data; and a procedure of, when the time measured by the measuring means is the time indicated by the appearance time data of the interlock data, reproducing the reproduction data related to the appearance time data.

Further, a tenth aspect of the present invention provides a storage medium in which a program for controlling a portable terminal is stored, the portable terminal being connected to a provider server having a database over a network so as to communicate with each other, the database being stored with a program start time of a program to be broadcasted and interlock data, the interlock data being composed of reproduction data for reproducing a character string and/or a voice related to a scene of the program and elapsed time data indicating the time elapsed from the program start time until the scene appears. Here, the storage medium comprises: a procedure of requesting the provider server to transmit the interlock data; a procedure of, when receiving the interlock data transmitted from the provider server in response to the transmission request for the interlock data, storing and holding the interlock data; a procedure of requesting the provider server to transmit current time and the program start time; a procedure of, when receiving current time data indicating the current time and program start time data indicating the program start time transmitted from the provider server in response to the transmission request for the current time and the program start time, measuring time using measuring means based on the time indicated by the current time data and of storing and holding the program start time data; and a procedure of, when the time measured by the measuring means is a time obtained by adding the program start time indicated by the program start time data to the elapsed time indicated by the elapsed time data, reproducing the reproduction data related to the elapsed time data.

Therefore, it is possible to obtain the same effects as those in the above-mentioned aspects by allowing the computer of the portable terminal to read out the storage medium and to execute processes according to the above-mentioned procedures.

In the present invention, according to the progress of a program to be broadcasted, it is possible to output the character string and/or the voice related to a scene of the program to the portable terminal used by a user. Therefore, it is possible for the user to watch a broadcast program with more pleasure.

Further, it is possible to provide various services suitable for a user's taste.

Furthermore, the character string or the voice is reproduced based on the current time of the server. Therefore, the user cannot reproduce at least one of the character string and the voice before the start of a program, and thus it is possible to prevent a synopsis of the program from being seen by the user before the start of the program.

Moreover, the time when the scene appears is composed of the program start time data indicating the program start time and the elapsed time data indicating the time elapsed from the program start time. In addition, in the case in which the program start time data is supplied from the provider server at the time when the reproduction of the interlock data starts, the program start time data stored in the database is updated even when the start time of the current program is delayed or moved up according to the relationship with a previous program. Thus, it is possible to secure the interlock between the program and the interlock data.

Therefore, for example, even for a programafter a baseball program that will be called of f or delayed because of the weather, it is possible to prevent the discordance or disagreement between each scene and the character string or voice output from the portable terminal.

### BRIEF DESCRIPTION OF THE DRAWINGS

Fig. 1 is a block diagram illustrating a first embodiment of the present invention;
Fig. 2 is a view illustrating program interlock data used in the first embodiment;
Fig. 3 is a flow chart illustrating the operation of the first embodiment;
Figs. 4A and 4B are views illustrating program interlock data used in a second embodiment; and
Fig. 5 is a flow chart illustrating the operation of the second embodiment.

### DESCRIPTION OF THE PREFERRED EMBODIMENTS

### (First Embodiment)

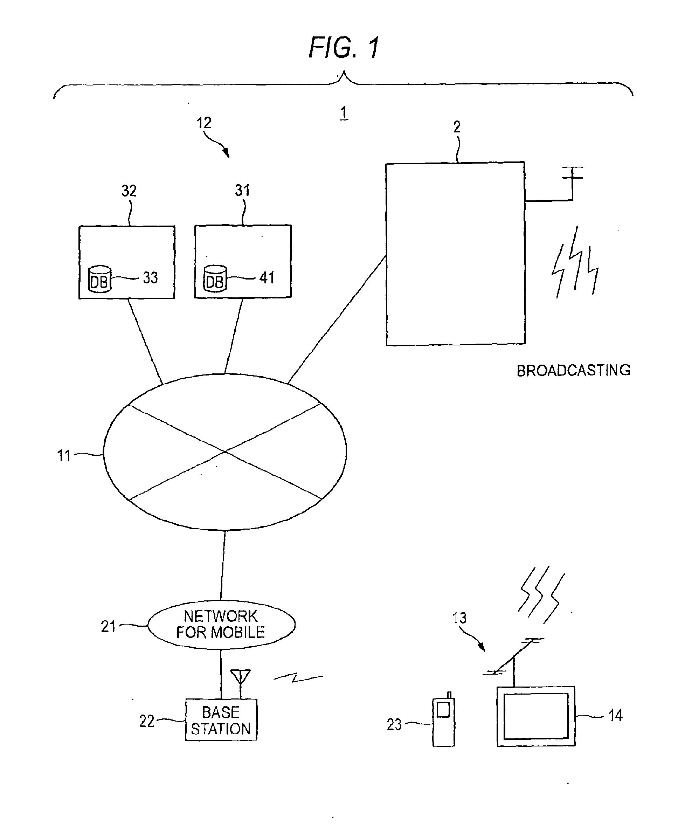

A first embodiment of the present invention will be described with reference to the accompanying drawings. Fig. 1 is a block diagram illustrating a program interlocking system 1 according to the present embodiment. The program interlocking system 1 is a system in which, a television broadcasting station 2 broadcasts, for example, a television serial drama. In the example, when a player appears in a scene, additional information related to the player, such as the player' s innermost thoughts or feelings, are output to a portable terminal as a character string and/or voice.

The program interlocking system 1 includes a network, such as the Internet 11, for example. A provider server 12 and the broadcasting station 2, for broadcasting television programs, are connected to the Internet 11. For example, the broadcasting station 2 may broadcast television programs over the radio waves by known techniques. A receiver 13 receives the broadcast television drama, and a scene of the television program is displayed on a monitor 14 and the voice of the television program is output from a speaker. A television receiver (e.g., a television set) is exemplified as the receiver 13.

A network 21 for mobile or wireless communications, provided by mobile phone service providers, is connected to the Internet 11. A number of base stations 22 are provided in the network 21, although any known means for providing communication with a mobile phone can be incorporated into the system without departing from the spirit and scope of the present invention. Therefore, a user watching a television broadcast at the receiver 13 can access the provider server 12 using a portable terminal, such as a mobile phone 23, through the Internet 11 and the base station 22 of the network 21.

The broadcasting station 2 includes a server (not shown), which is connected to the Internet 11. A database (not shown) connected to the broadcasting station server includes a program storing area for storing programs and a data storing area for storing data. The server is operated according to a Web server program stored in the program storing area. Further, the broadcasting station server communicates with the provider server 12 and transmits, to the provider server 12, program names to be broadcast and the corresponding scheduled start times, which are stored in the database.

The provider server 12 includes a main server 31 and a program guide server 32. The program guide server 32 has a database 33, which includes a program storing area for storing programs and a data storing area for storing data. The program guide server 32 is operated according to a Web server program stored in the program storing area. In addition, the program guide server 32 communicates with the main server 31 and the broadcasting station server. The program guide server 32 acquires the program names to be broadcasted and the scheduled start times thereof from the server of the broadcasting station 2 to store the acquired data in its database 33 of the program guide server 32.

The main server 31 has a database 41, which includes a program storing area for storing programs and a data storing area for storing data. The main server 31 is operated according to a Web server program stored in the program storing area, and is configured to communicate with the program guide server 32, the server of the broadcasting station 2, and the mobile phone 23.

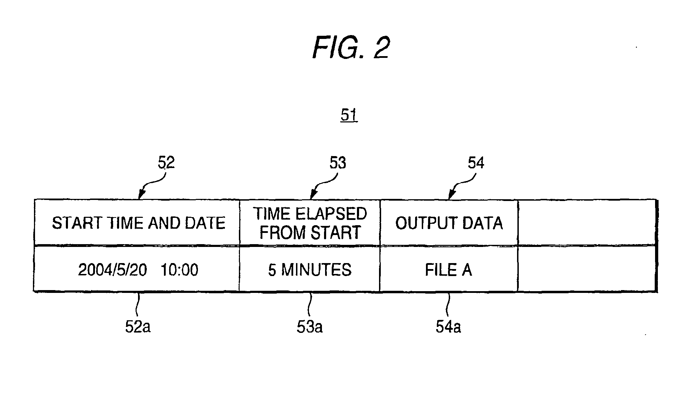

Program interlock data 51, an example of which is shown in Fig. 2, is read out from the program guide server 32 or directly input in advance, and is stored in the database 41 of the main server 31. In an embodiment of the invention, the program interlock data 51 includes a start time and date field 52 for storing start time data 52a, indicating the start time of each program. The program interlock data further includes a time elapsed from start field 53 that stores elapsed time data 53a indicating the time elapsed from the start time of the program, and an output data field 54 that stores files 54a related to the respective elapsed time data 53a. The files 54a stored in the output data field 54 are respectively formed of reproduction data composed of a character string or voice that is reproduced from a scene appearing at a time obtained by adding the start time, indicated by the start time data 52a, to the elapsed time, indicated by the elapsed time data 53a.

Further, the mobile phone 23 is provided with a reading device (notshown) for reading out an interlocking program stored in a storage medium, such as a portable memory, and for storing the program in a storage area of an internal memory thereof. A computer in the mobile phone 23 is operated according to the interlocking program stored in the storage area to communicate with the provider server 12.

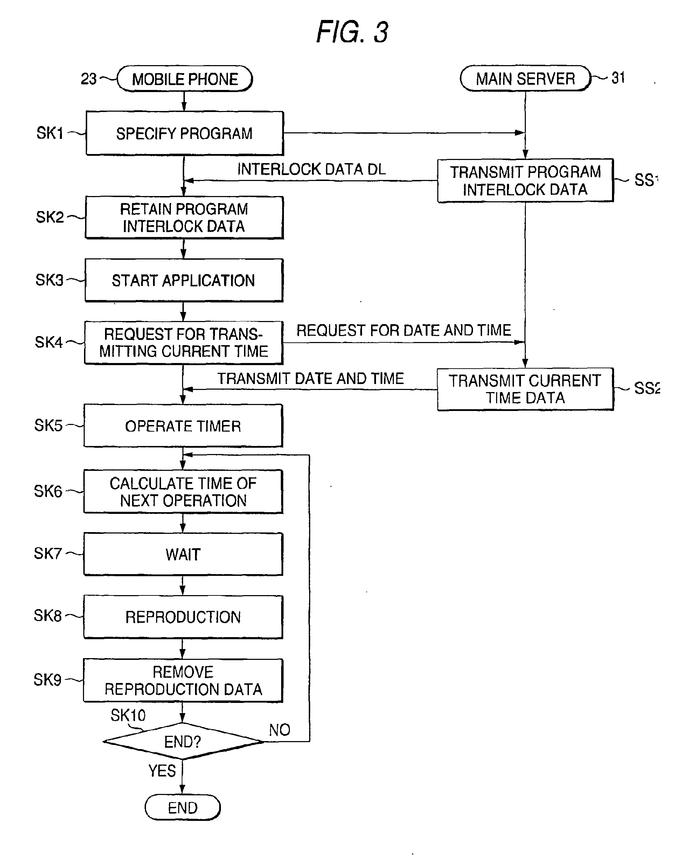

The operation of the present embodiment having the above-mentioned structure will be described with reference to a flow chart shown in Fig. 3.

The user watching a broadcast program accesses the main server 31 of the provider server 12 using the mobile phone 23 to acquire a list of interlock programs. The user selects a program to watch from the list to transmit, to the main server 31, program specification data indicating that the program has been selected in order to request transmission of the interlock data related to the respective scenes of the program (SK1). The main server 31, having received the transmission request, retrieves the program interlock data 51 related to the requested program from the database 41, and then transmits the program interlock data 51 to the mobile phone 23 having requested the data transmission (SS1). Then, the mobile phone 23, having received the program interlock data 51, stores the program interlock data 51 in its internal memory and holds the data (SK2) .

Furthermore, the user starts a program interlock process using an application function included in the mobile phone 23 (SK3) .

When the program interlock process starts, the mobile phone 23 requests the main server 31 to transmit a current time before reproducing the file 54a of the output data field 54 in the program interlock data 51 (SK4). The main server 31, having received the transmission request for the current time, acquires current time data, indicating the current time, from a built-in timer and then transmits the data to the mobile phone 23 (SS2). Upon receiving the current time data, the mobile phone 23 operates the built-in timer (SK5), using the current time indicated by the current time data to start measuring time.

The next operating time is calculated by adding the start time, indicated by the start time data 52a stored in the start time and date field 52 of the program interlock data 51, to the elapsed time indicated by the elapsed time data 53a stored in the head of the field 53 for the time elapsed from start. The time of the next operation is calculated from the difference between the calculated operating time and the time measured by the timer (SK6) . Then, a waiting state is maintained until the calculated time elapses (SK7) . For example, when the time and date "10:00 May 20, 2004" is stored in the start time and date field 52, and "5 minutes" is stored in the head of the field 53 for the time elapsed from start, the appearance time is "10:05 May 20, 2004." In this case, when the time measured by the timer is "9: 50 May 20, 2004, " the time of the next operation is determined to be "15 minutes."

When the calculated time "15 minutes" elapses, the time indicated by the appearance time data of the present invention calculated by adding the start time to the elapsed time is "10 : 05 May 20, 2004." Therefore, "file A" in the output data field 54 related to the elapsed time data 53a in the field 53 for the time elapsed from start is reproduced (SK8).

In this case, the "file A" includes character data and voice data used for outputting a player's innermost thoughts or feelings, for example, as a character string or a voice in accordance with a scene of a drama to be broadcast. Accordingly, a character string corresponding to the player's innermost thoughts or feeling can be displayed on the monitor of the mobile phone 23 and a corresponding voice can be simultaneously output from the speaker of the mobile phone 23 by reproducing the "file A.".

When the reproduction of the "file A" is completed, the "file A" is removed from the internal memory to increase available capacity thereof (SK9). Then, it is determined whether the reproduction of all the files 54a set in the output data field 54 is completed (SK10). When the reproduction of all the files 54a is not completed, the process branches to step SK6. Then, steps SK6 to SK10 are repeated until the reproduction of all the files 54a is completed. On the other hand, when the reproduction of all the files 54a is completed, the process ends.

As such, it is possible to output a character string or a voice indicating the player's innermost thoughts or feelings to the mobile phone 23 used by a user in accordance with the progress of a television program broadcast by the broadcasting station 2. Therefore, the user can enhance his/her enjoyment of the television program.

It is also possible to provide various services suitable for a user's taste.

Further, the character string and/or voice is reproduced based on the current time of the server. Therefore, the user cannot reproduce the character string or voice before the start of a program, thus preventing a synopsis of the program from being provided before the start of the program.

### (Second Embodiment)

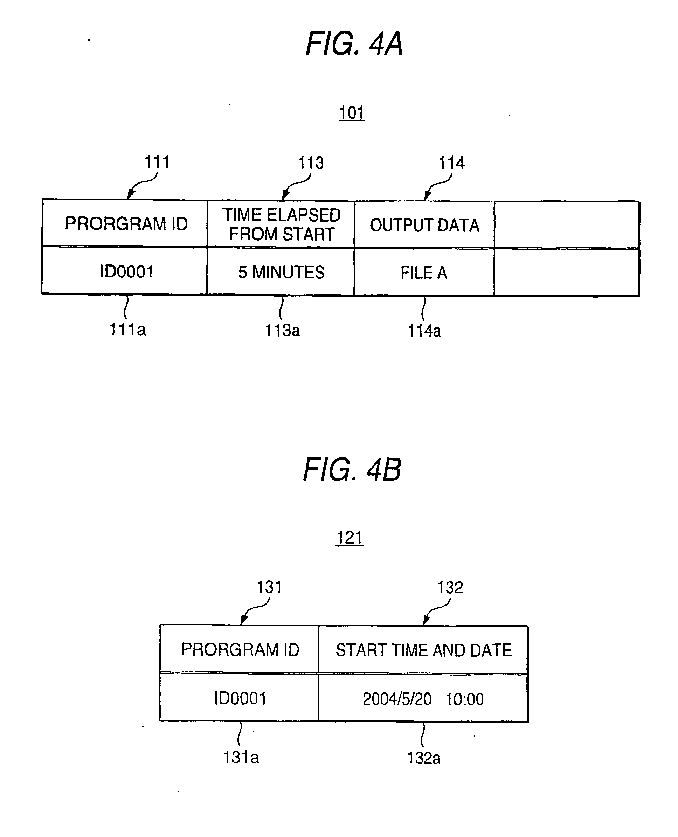

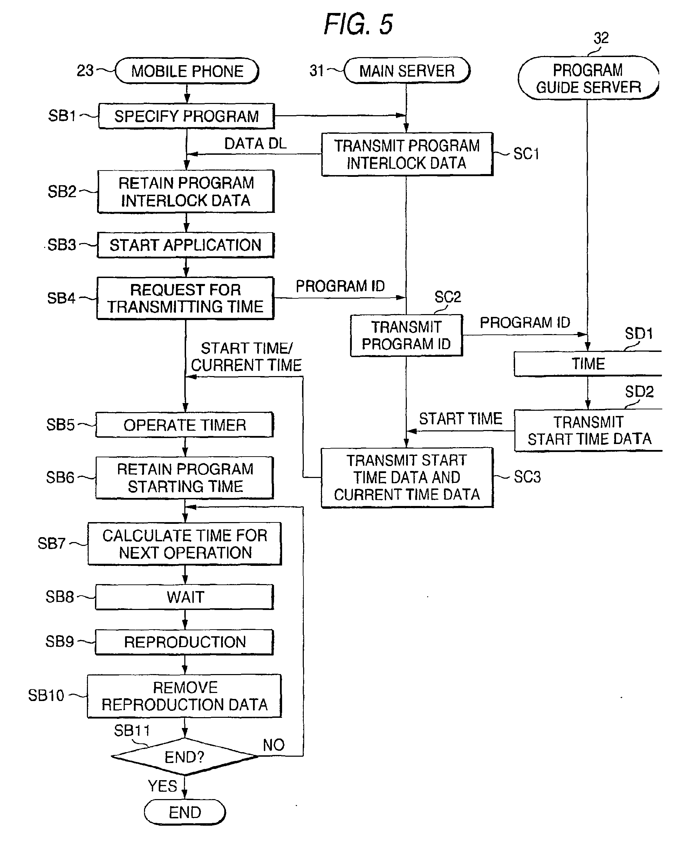

Figs. 4A, 4B and 5 are views illustrating a second embodiment of the present invention. The structure of hardware of the second embodiment is the same as that in the first embodiment, and only the different aspects of the second embodiment will be described.

As shown in Fig. 4A, program interlock data 101 is stored in the database 41 of the main server 31. The program interlock data 101 comprises a program ID field 111 for storing a program ID 111a supplying interlock data, a time elapsed from start field 113 in which elapsed time data 113a indicating the time elapsed from the start time of the respective programs is stored, and an output data field 114 for storing files 114a related to each elapsed time data 113a. The file 114a stored in the output data field 114 is formed of reproduction data including a character string and/or a voice reproduced from a scene appearing at the time obtained by adding the elapsed time indicated by the elapsed time data 113a to the start time indicated by the start time data of a program.

Further, as shown in Fig. 4B, program guide data 121 is stored in the database 33 of the program guide server 32, and the program guide data 121 is continuously updated by the communication with the broadcasting station 2.

A program ID field 131 for storing a program ID 131a, supplying interlock data, and a start time and date field 132, for storing start time and date data 132a indicating the start time of the respective programs, are stored in the program guide data 121 in relation to each other.

The operation of the present embodiment having the structure described above will be described with reference to the flow chart shown in Fig. 5.

The user watching a broadcast program accesses the main server 31 of the provider server 12 using the mobile phone 23 to acquire an interlock program list. The user may then select the program from the list. The user transmits program specification data, specifying that the program has been selected, to the main server 31 to request the transmission of the interlock data related to the respective scenes of the program (SB1). The main server 31, having received the transmission request, retrieves the program interlock data 101 related to the requested program from the database 41 and then transmits the program interlock data 101 to the mobile phone 23 (SC1) . Then, themobilephone23, having received the program interlock data 101, stores the program interlock data 101 in its internal memory to retain the data (SB2).

Further, the user performs a program interlock process using an application function included in the mobile phone 23 (SB3). When the program interlock process starts, the mobile phone 23 requests the main server 31 to transmit time data before reproducing the files 114a of the output data field 114 in the program interlock data 101 (SB4). The main server 31 receives the transmission request for the time data and transmits program ID data "ID0001" of the program to be reproduced to the program guide server 32 (SC2) . This enables the program guide server 32 to confirm the start time of the program.

In response, the program guide server 32 retrieves the program ID data "ID0001" from the program ID field 131 of the program guide data 121 stored in the database 33. The program guide server 32 then acquires the start time of the program corresponding to the program ID data "ID0001" from the start time and date field 132 (SD1) . Then, the program guide server 32 transmits the start time and date data 132a, indicating the acquired latest start time, to the main server 31 (SD2).

The main server 31 transmits the start time and date data 132a received from the program guide server 32, and the current time data indicating the current time acquired from the built-in timer of the main server 31, to the mobile phone 23 (SC3) . When receiving the current time data, the mobile phone 23 uses the current time data as the current time to start measuring time (SB5) . In addition, the mobile phone 23 updates the start time of the program stored in the internal memory to the time indicated by the received latest start time and date data 132a and stores the updated time (SB6).

Subsequently, the next operating time is calculated by adding the stored start time to the time elapsed from start. The time for the next operation is calculated from the difference between the operating time and the time measured by the timer (SB7) . Then, awaiting state is maintained until the calculated time elapses (SB8) . In other words, in the depicted example, when the time and date "10:00 May 20, 2004" is stored in the start time and date field 132 and "5 minutes" is set in the head of the field 113 for the time elapsed from start, the appearance time is "10:05 May 20, 2004". In this case, when the time measured by the timer is "9:50 May 20, 2004", the time calculated for the next operation is "15 minutes".

When the "15 minutes" elapses, the time calculated by adding the start time to the elapsed time is "10:05 May 20, 2004". Therefore, "file A" in the output data field 114, related to the elapsed time data 113a in the field 113 for the time elapsed from start, is reproduced (SB9).

In this example, the "file A" includes, for example, character data and voice data used for outputting a player's innermost thoughts or feelings over the mobile phone 23 as a character string or a voice in accordance with a scene of a broadcast drama. Accordingly, a character string corresponding to the player's innermost thoughts or feeling can be displayed on the monitor of the mobile phone 23 and a voice corresponding thereto can be simultaneously output from the speaker of the mobile phone 23 by reproducing the "file A". Of course, the character data and voice data may output other information relating to the players and/or the program without departing from the spirit and scope of the product invention.

When the reproduction of the "file A" is completed, the "file A" is removed from the internal memory to increase available capacity thereof (SB10). Then, it is determined whether the reproduction of all the files 114a set in the output data field 114 has been completed (SB11) . When the reproduction of all the file 114a is not complete, the process branches to step SB7. Then, steps SB7 to SB11 are repeated until the reproduction of all the files 114a is complete. On the other hand, when the reproduction of all the files 114a is complete, the process ends.

It is thus possible to output the character string or voice indicating player's thoughts and feelings to the mobile phone 23 in accordance with the progress of the television program broadcasted by the broadcasting station 2. Therefore, the user can watch a television program with more enjoyment.

It is likewise possible to provide various services suitable for a user's taste.

Further, the character string or voice is reproducedbased on the time transmitted from the main server 31. Therefore, the user cannot reproduce the character string or voice before the start of a program, preventing a synopsis of a program from being accessed before the start of the program.

Furthermore, the time when a scene appears includes the start time and date data 132a indicating the start time of a program and the elapsed time data 113a indicating the time elapsed from the start time of the program. Thus, it is possible to receive the start time and date data 132a of a program from the program guide server 32 having the latest updated data before reproducing the program interlock data 101. Therefore, even when the start time of the program is delayed or moved up with respect to a previous program, it is possible to secure the interlock between the files in the output data 114 and the program by updating the start time data of the program stored in the internal memory of the mobile phone 23.

Therefore, even when a program follows a baseball game, for example, that is cancelled or delayed due to inclimate weather, the present invention still prevents discordance between each scene and the corresponding character string or voice output from the mobile phone 23.

Further, in the foregoing embodiment, a character string and voice are simultaneously output from the mobile phone 23. However, in alternative embodiments, either or both of the character string and the voice may be output from a mobile phone 23 without affecting the spirit and scope of the invention.

Also, in the foregoing embodiment, the current time transmitted from the main server 31 is likewise used as the current time of the mobile phone 23. However, in alternative embodiments, the current time of the mobile phone 23 obtained by adding the transmitted current time to a correction value based on the time delay of the data communication between the main server 31 and the mobile phone 23, may be used without affecting the spirit and scope of the present invention.

Moreover, in the foregoing embodiment, a portable memory is used as an example of a storage medium. However, alternative embodiments may include any suitable storage media, such as an optical disc, a magnetic disc, a magneto-optical disc, and a memory card, without affecting the spirit and scope of the present invention.

It is noted that the foregoing examples have been provided merely for the purpose of explanation and are in no way to be construed as limiting of the present invention. While the present invention has been described with reference to certain embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention extends to all functionally equivalent structures, methods and uses, such as are within the scope of the appended claims.

## Claims

1. A program interlocking system comprising a portable terminal used by a user connected to a provider server over a network, the provider server comprising a database that stores interlock data for interlocking with a program to be broadcast, the interlock data comprising reproduction data for reproducing at least one of a character string and a voice related to a scene of the program, and appearance time data indicating an appearance time corresponding to when the scene appears;
wherein the portable terminal comprises:
an interlock data requester that requests the provider server to transmit the interlock data;
a memory that stores and holds the interlock data;
a current time requester that requests the provider server to transmit a current time;
a time data processor that measures a time based on the current time; and
a data reproducer that, when the measured time is the appearance time indicated by the appearance time data, reproduces the reproduction data corresponding to the appearance time data; and
wherein the provider server comprises:
an interlock data transmitter that, in response to the transmission request for the interlock data from the portable terminal, transmits the interlock data stored in the database to the portable terminal; and
a current time data transmitter that, in response to the transmission request for the current time from the portable terminal, transmits the current time data indicating the current time to the portable terminal.

2. A program interlocking system comprising a portable terminal used by a user and a provider server, connected to the portable terminal over a network, the provider server having a database that stores a program start time of a program to be broadcast and interlock data for interlocking with the program, the interlock data comprising reproduction data for reproducing at least one of a character string and a voice related to a scene of the program, and elapsed time data indicating a time elapsed from a program start time until the appearance of the scene,
wherein the portable terminal comprises:
an interlock data requester that requests the provider server to transmit the interlock data;
an interlock data memory that stores and holds the interlock data;
a time requester that requests the provider server to transmit a current time and the program start time;
a time data processor that measures a time based on the current time and that stores the program start time data; and
a data reproducer that, when the measured time is a time obtained by adding the program start time to the elapsed time, reproduces the reproduction data related to the elapsed time; and
wherein the provider server comprises:
an interlock data transmitter that, in response to the transmission request for the interlock data from the portable terminal, transmits the interlock data stored in the database to the portable terminal; and
a time data transmitter that, in response to the transmission request for the current time and the program start time from the portable terminal, transmits the current time data indicating the current time and the program start time data indicating the program start time to the portable terminal.

3. A portable terminal connected over a network to a provider server, having a database that stores interlock data comprising reproduction data for reproducing at least one of a character string and a voice related to a scene of a program to be broadcast, and appearance time data indicating an appearance time corresponding to when the scene appears, the portable terminal comprising:
an interlock data requester that requests the provider server to transmit the interlock data;
a memory that stores and holds the interlock data;
a current time requester that requests the provider server to transmit a current time;
a time data processor that measures a time based on the current time; and
a data reproducer that, when the measured time is the appearance time indicated by the appearance time data, reproduces the reproduction data corresponding to the appearance time data; and

4. A portable terminal connected over a network to a provider server, having a database that stores a program start time of a program to be broadcast and interlock data, the interlock data comprising reproduction data for reproducing at least one of a character string and a voice related to a scene of the program, and elapsed time data indicating a time elapsed from a program start time until the scene appears, the portable terminal comprising:
an interlock data requester that requests the provider server to transmit the interlock data;
an interlock data memory that stores and holds the interlock data;
a time requester that requests the provider server to transmit a current time and the program start time;
a time data processor that measures a time based on the current time and that stores the program start time data; and
a data reproducer that, when the measured time is a time obtained by adding the program start time to the elapsed time, reproduces the reproduction data related to the elapsed time and;

5. A program interlocking method using a portable terminal connected over a network to a provider server having a database, the database storing interlock data comprising reproduction data for reproducing at least one of a character string and a voice related to a scene of a program to be broadcast, and appearance time data indicating a time at which the scene appears, the method comprising:
requesting the provider server to transmit the interlock data;
request for the interlock data, storing the transmitted interlock data;
requesting the provider server to transmit a current time data, indicating a current time;
measuring a time based on the transmitted current time data;
when the measured time is a time indicated by the appearance time data of the interlock data, reproducing the reproduction data related to the appearance time data.

6. A program interlocking method using a portable terminal connected over a network to a provider server having a database, the database storing a program start time of a program to be broadcast and interlock data, the interlock data comprising reproduction data for reproducing at least one of a character string and a voice related to a scene of the program, and elapsed time data indicating a time elapsed from a program start time until the scene appears, the method comprising:
requesting the provider server to transmit the interlock data;
receiving and storing the interlock data,;
requesting the provider server to transmit current time and the program start time;
receiving current time data, indicating the current time, and program start time data, indicating the program start time, measuring a time based on the current time, and storing the program start time data; and
when the measured time is a sum of the program start time indicated by the program start time data and the elapsed time, reproducing the reproduction data related to the elapsed time data.

7. A computer readable medium for storing a program, executed by a computer of a portable terminal, connected over a network to a provider server having a database, the database storing interlock data, comprising reproduction data for reproducing at least one of a character string and a voice related to a scene of a program to be broadcast, and corresponding appearance time data indicating a time at which the scene appears, the computer readable medium comprising:
requesting code segment that requests the provider server to transmit the interlock data;
a receiving code segment that receives and stores the interlock data transmitted from the provider server;
a time requesting code segment that requests the provider server to transmit current time data;
a time data processing code segment that receives the current time data, indicating a current time, and measures a time based on the current time and;
a reproducing code segment that reproduces the reproduction data related to the appearance time data when the measured time is the appearance time of the interlock data.

8. A computer readable medium for storing a program, executed by a computer of a portable terminal, connected over a network to a provider server having a database, the database storing a program start time of a program to be broadcast and interlock data, the interlock data comprising reproduction data for reproducing at least one of a character string and a voice related to a scene of the program and elapsed time data indicating a time elapsed from the program start time until the scene appears, the computer readable medium comprising:
requesting code segment that requests the provider server to transmit the interlock data;
a receiving code segment that receives and stores the interlock data transmitted from the provider server;
a time requesting code segment that requests the provider server to transmit current time data and program start time data;
a time data processing code segment that receives the current time data, indicating a current time, and the program start time data, indicating the program start time, transmitted from the provider server, measures a time based on the current time and stores the program start time data; and
a reproducing code segment that reproduces the reproduction data related to the elapsed time data, when the measured time is a sum of the program start time indicated by the program start time data and the elapsed time indicated by the elapsed time data.
